# EUROPEAN PATENT SPECIFICATION

(11) **EP 0 698 913 B1**
(45) Date of publication and mention of the grant of the patent: **24.03.1999**
(21) Application number: 95112953.5
(22) Date of filing: 17.08.1995
(51) Int. Cl.: H01J 61/32, H01J 61/70, H01J 61/10, H01J 9/24

(54) **Compact fluorescent lamp**
Kompakte Leuchtstofflampe
Lampe fluorescente compacte

(30) Priority: 17.08.1994 US 291887
(43) Date of publication of application: 28.02.1996
(73) Proprietor: MATSUSHITA ELECTRIC WORKS, LTD., Kadoma-shi Osaka 571 (JP)
(72) Inventor: Maya, Jakob, Brookline, MA 02146 (US); Anandan, Munisamy, Burlington, MA 01803 (US)
(74) Representative: Strehl Schübel-Hopf & Partner

(56) References cited:
- DE-A- 2 724 296
- DE-A- 2 725 329
- DE-A- 4 313 017
- FR-A- 866 332
- US-A- 2 405 518
- US-A- 2 406 146
- US-A- 2 446 712
- US-A- 2 494 857
- US-A- 2 501 376
- US-A- 3 226 590
- US-E- R E22 896
- PATENT ABSTRACTS OF JAPAN vol. 950 no. 003,31 July 1995 & JP-A-07 065789 (NEC KANSAI LTD) 10 March 1995, & DATABASE WPI Week 9519 Derwent Publications Ltd., London, GB; AN 95-142274 & JP-A-07 065 789 (NEC KANSAI LTD) , 10 March 1995
- DATABASE WPI Week 9519 Derwent Publications Ltd AN 95-142274 & JPA-A-07 065 789(NEC KANSAI LTD),10 March 1995

## Description

### TECHNICAL FIELD

The present invention relates to a substantially flat compact, arc discharge, fluorescent lamp.

### BACKGROUND ART

Fluorescent lamps can provide a higher lumen output and longer lamp life than regular incandescent lamps. Typically, the efficiency of an incandescent lamp is 16 lumens per watt (lpw) of electrical energy input; while a fluorescent lamp provides, typically, 50-60 lpw. The incandescent lamps last only about 750 hours; while the fluorescent lamps last anywhere from six to ten thousand hours. In commercial establishments where one has to pay labor to change light bulbs, the less often a bulb needs to be changed the more (measurably) economical the installation becomes. Thus, substantial energy savings and cost savings would be obtained by replacing the incandescent lamps with the fluorescent lamps. For such a replacement, it is desired to make the fluorescent lamps more compact to fit them into a smaller space because the general environment around incandescent bulbs is substantially smaller than the environment that existing fluorescent bulbs need. Known compact fluorescent lamps are typically formed by bending a glass tube in a U-shaped or circular form to minimize its volume. Extensions of this basic design are Double-U, Triple-U and Quadruple-U forms which are simply the joining of the basic-U.

However, these compact fluorescent lamps tend to be long to maintain an arc length required for a desired light output. Further, an external reflector (fixture) is needed if these are to be employed for preferential directional lighting. In addition, the compact fluorescent lamps involves a tradeoff among many parameters. In other words, it is often impossible to optimize all the parameters simultaneously. For example, the smaller size, the less the efficiency and often the higher cost. Furthermore, as the size is reduced, heat removal becomes a problem. Heat has to be removed so as to maintain an optimum mercury vapour pressure for optimum efficiency. Similarly, as size is reduced the phosphor loading (current density per surface area of phosphor or power per surface area of phosphor) increases leading to faster phosphor light output deterioration. Again, as size is reduced (due to the difficulty of heat removal) electrical components in a base of the lamp tend to get very hot which leads to shorter life for the lamp. Attempts to solve these heat problems include coating the phosphor with alumina and using amalgams, perforated outer jackets, heat transfer conduits, etc.

Another application where substantially flat compact, fluorescent lamps are used is related to the expanded use of lap-top personal computers. With the advent of Liquid Crystal Displays (LCDs) for the lap-top computers, the demand of the flat fluorescent lamps as Area-lamps increased. This increase is due to LCDs' requirement for some form of backlighting. This application requires: (i) the lamp needs to be flat with either a rectangular geometry or a square geometry, (ii) the brightness over the lamp surface has to be uniform, (iii) a dimming ratio should be > 1000:1. In a lap-top computer, it is preferred that a thickness of the flat fluorescent lamp in millimeters or less. In an overhead lighting fixture for general lighting purposes, it is preferred that the thickness of the flat fluorescent lamp is in centimeters or more. For example, U.S. Patent No. 3,226,590, to Christy, discloses a large area substantially flat fluorescent lamp called "panel-lamp" that consists of two corrugated glass plates laid over each other and sealed to withstand the atmospheric pressure. By virtue of its corrugation and seal pattern, an electrical discharge path in the shape of a serpentine or labyrinthine is generated. A similar corrugated structure is adopted for a round, substantially flat lamp which is disclosed in U.S. Patent No. 3, 243,630, to W.C. Martyny. However, these lamps are not practical for retrofitting into incandescent lamp applications.

Other substantially flat arc- discharge fluorescent lamps are disclosed in US- A-2406146, wherein a sealed flat chamber is filled with a discharge gas, said chamber having a top or bottom wall opaque to fluorescent light, a bottom or top wall transparent to fluorescent light and an inner wall structure sealingly interconnecting said top and bottom walls to form a continuous, substantially flat spiral discharge path, a phosphor coating formed on said wall structure and on inner surfaces of said top and bottom walls, and a pair of electrodes disposed at opposite ends of said discharge path for establishing and maintaining an arc or said discharge gas, and in US- A- 2405518, wherein the inner wall structure includes an outer wall and a plurality of inner walls, the inner walls being formed of a continuos strip.

For improving the above problems, the present invention as disclosed in the independent claims is directed to a substantially flat compact, arc discharge, fluorescent lamp having a unique discharge path or pattern. The lamp comprises a flat chamber filled with a discharge gas. The chamber has a top wall opaque to fluorescent light and a bottom wall transparent to fluorescent light. An inner wall structure sealingly connects between the top and bottom walls to form a continuous discharge path extending in a substantially flat spiral pattern within the chamber. A phosphor coating is formed on the wall structure and inner surfaces of the top and bottom walls. A pair of electrodes are disposed at the opposite ends of the discharge path to establish and maintain an arc of the discharge gas between the electrodes.

In the present invention, a length of the discharge path is substantially determined by a width of the discharge path. That is, as the discharge path width is reduced, at the same lamp dimension, the discharge path length can be increased. Therefore, the present fluorescent lamp can provide a wide range of lumens per unit volume of the chamber without changing the lamp dimension. Additionally, flat lamps have to be a structure capable of withstanding the atmospheric pressure. In the present fluorescent lamp, since the flat chamber is uniformly reinforced with the inner wall structure, any cracking due to the pressure on the flat chamber can be effectively prevented. In particular, this structural feature would be favorable as an area of the flat surface of the chamber is increased.

Therefore, a primary object of the present invention is to provide a substantially flat compact, arc discharge, fluorescent lamp with a spiral discharge path for supplying a requested lumen output.

In a preferred embodiment of the present invention, the discharge path is of a rectangular or rounded cross section.

In a further preferred embodiment of the present invention, a reflective coating is partially formed on one side of the phosphor coating such that light striking the reflective coating is directed back towards the opposite side of the phosphor coating. Many conventional compact fluorescent lamps use separate reflectors. However, in the present invention, since the reflective coating is formed within the chamber, it will results in saving on a lighting fixture. Therefore, the present fluorescent lamp can provide preferential directional lighting such as downlighting without using any external and expensive lighting fixture.

In a still further preferred embodiment of the present invention, a thickness of the wall structure, the discharge path width and a vertical height of the lamp are determined so as to provide for a range of lumens per chamber volume of about 4 to about 17 lm/cm³ (about 70 to about 280 lumen per cubic inch).

In another preferred embodiment of the present invention, the fluorescent lamp comprises a ballast and incandescent-type base to allow the fluorescent lamp to detachably attach to a socket of regular incandescent lamps. Therefore, it is possible to replace the incandescent lamps with the present fluorescent lamp by the use of the same physical setting as the incandescent lamps.

The fluorescent lamp explained above can be made in accordance with the following process of the present invention. An outer glass ring, a plurality of inner glass rings with different diameters, top and bottom glass plates having the same diameter as the outer ring and a plurality of back discharge suppresser plates are prepared. Each of the inner rings has a slot. A reflective coating is formed on the inner rings and a flat surface of the top plate. The outer and inner rings are sealingly attached in a concentric pattern to the bottom plate to define an inner channel between adjacent rings. The suppresser plates are sealingly attached to the bottom plate and between the adjacent rings such that each of the inner channels is joined with adjacent inner channel through the slot to form a continuous, flat spiral discharge path on the bottom plate. Subsequently, a phosphor coating is formed on the reflective coating and a flat surface of the bottom plate on which the discharge path extends. A pair of electrodes are sealingly attached to the top plate at positions corresponding to the opposite ends of the discharge path. It is preferred that one of the electrodes has a mercury dispensing getter. Then, the top plate is sealingly attached to free edges of the inner and outer rings on the bottom plate to form a lamp vessel. The lamp vessel is filled with mercury and at least one rare gas to thereby obtain the fluorescent lamp of the present invention. To stabilize the lamp characteristics, an aging treatment would be performed to the lamp.

In general, a bending step of a glass tube, which inherently is a slow process, is required to form serpentine or labyrinthine discharge paths of current fluorescent lamps. However, in the present process, it is possible to efficiently make the fluorescent lamp with the spiral discharge path without carrying out such a bending step. In addition, a distance between the adjacent rings, that is, the discharge path width, can be determined by changing the number of the inner rings. Therefore, it is convenient to design the spiral discharge path for providing a requested lumen output.

Other objects, features and advantages will be apparent from the following detailed description of preferred embodiments referring to the attached drawings.

### BRIEF DESCRIPTION OF THE DRAWINGS

FIG. 1 is a perspective view of a flat rounded, arc discharge, fluorescent lamp of a first embodiment of the present invention, in which a viewing glass plate is not shown;
FIG. 2 is a side view of a unidirectional lamp having the fluorescent lamp and a ballast;
FIG. 3 is a cross-sectional view of the fluorescent lamp for illustrating an arrangement of phosphor/reflective coatings;
FIG. 4 is a cross-sectional view of the fluorescent lamp for illustrating another arrangement of phosphor/reflective coatings;
FIG. 5 is an exploded perspective view helpful understanding a process of making the fluorescent lamp of the present invention;
FIG. 6 is a perspective view of a flat rectangular, arc discharge, fluorescent lamp of a second embodiment of the present invention, in which a viewing glass plate is not shown.

### DETAIL DESCRIPTIONS OF THE PREFERRED EMBODIMENTS

### First Embodiment

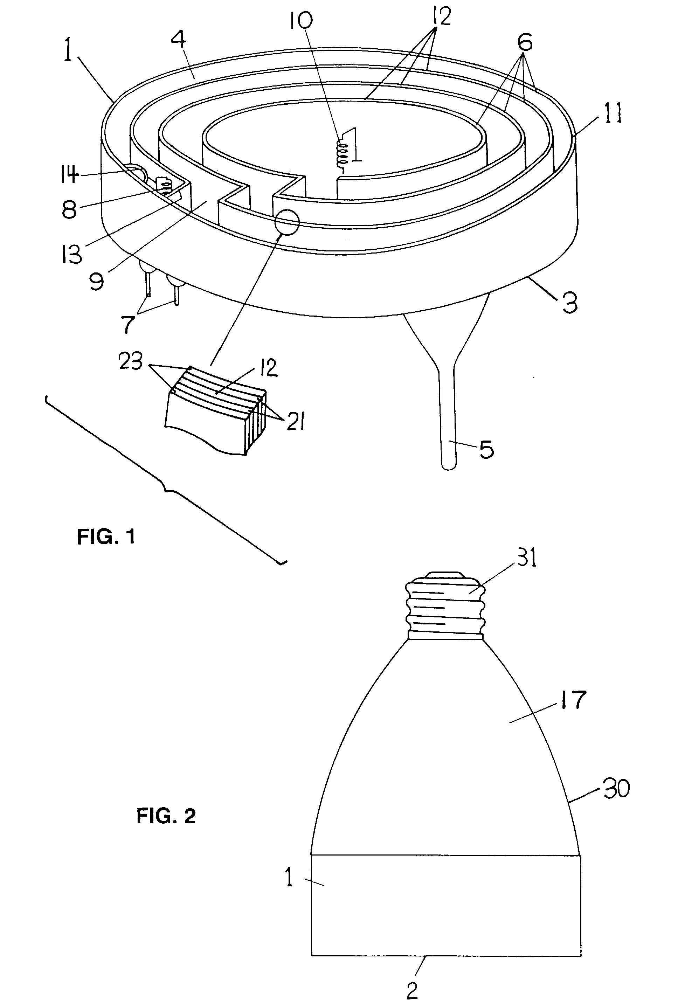

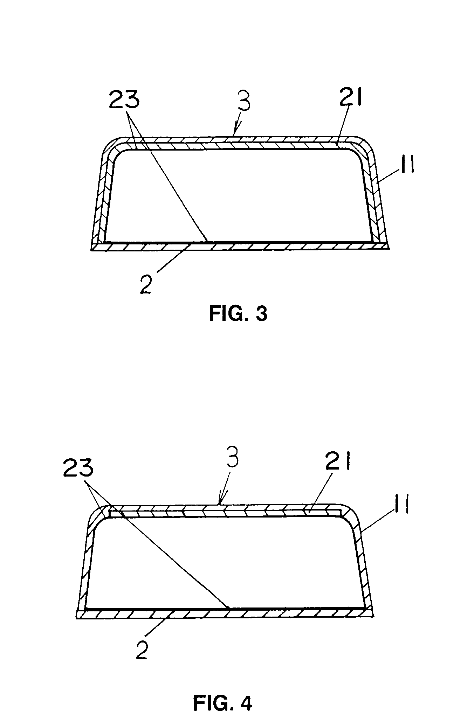

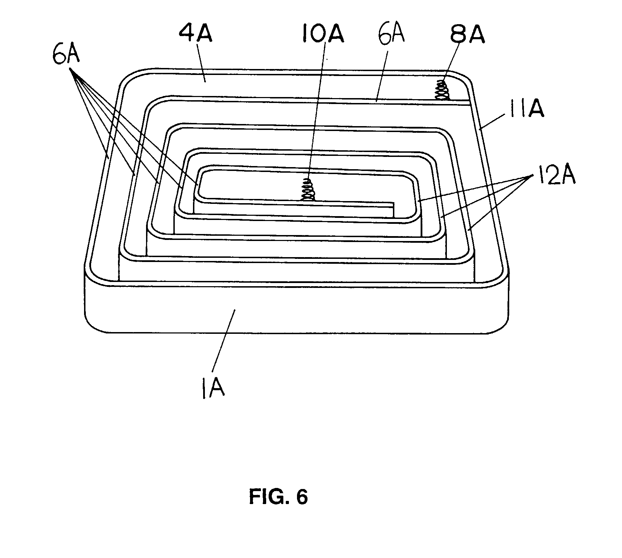

A substantially flat, rounded, arc discharge, fluorescent lamp **1** of the first embodiment is explained in detail. In FIG.1, a viewing glass plate **2** (shown in FIG. 6) transparent to fluorescent light is removed from the lamp **1**, so that a continuous, flat spiral discharge path **4** is viewable. The discharge path **4** has a rectangular cross section. There are concentric rings **6** that extend vertically from a cathode glass plate **3**. The concentric rings **6** consist of an outer ring **11** and three inner rings **12** having different diameters. There are slotted opening **9** in each of the inner rings **12** and back discharge suppresser plates **13** joining each ring with adjacent ring to obtain the spiral discharge path **4**. First and second electrodes **8** and **10** are disposed at or near the opposite ends of the discharge path **4**. The first electrode **8** has a mercury getter ring **14.** Numeral **5** designates an exhaust tube connecting with a through-hole in the cathode plate **3**, as described later. The lamp **1** is filled with mercury and a rare gas as a discharge gas. If necessary, it is possible to use any kind of rare gas or rare gas mix at any pressure plus a mercury drop of any weight or a mercury amalgam of any composition. Numeral **7** designates a pair of electrical leads for the first electrode **8** which make electrical connections. The electrode **10** also has similar electrical leads. In this embodiment, the diameter of the lamp **1** is 76 mm (3"), and the discharge path length is about 800 mm (about 32"). In this lamp, a reflective coating **21** such as alumina (Al₂O₃) or silicon oxide (SiO₂), which is capable of reflecting UV and visible light, is formed on both of inside and outside surfaces of the inner rings **12** and an inside surface of the cathode plate **3**. The reflective coating **21** is also formed on an inside surface of the outer ring **11** to prevent a visible radiation through the outer ring. A phosphor coating **23** is formed on the entire surface of the reflective coating **21** and an inside surface of the viewing plate **2**, as shown in FIG. 3. It is possible to use any kind of phosphor or phosphor mix for the phosphor coating. Therefore, the lamp **1** of this embodiment is adequate for a unidirectional lighting such as downlighting. Of course, It is possible to adopt another arrangement of the reflective coating **21** in the lamp **1**. For example, as shown in FIG. 4, since the reflective coating **21** is not formed on the inside surface of the outer ring **11**, visible light is radiated through the outer ring as well as the viewing plate **2**. This kind of flexibility is not found in a bent tube approach of the prior art's fluorescent lamps.

By the way, the rectangular cross section of the discharge path **4** gives a larger surface area than a circular one. This is important because the larger the surface area of the phosphor coating for the same power loading, the better the lumen maintenance and the phosphor coating suffers less deterioration. A rate at which the phosphor coating loses luminosity determines the life of the lamp. Therefore, the flat fluorescent lamp **1** having the discharge path **4** of the rectangular cross section is likely to have better lumen maintenance or show a longer lamp life when compared with a tubular or bent tube fluorescent lamp of equal lumen output. Alternatively, of course, when the power loading in the fluorescent lamp **1** is increased so as to be equal to the power loading in the bent tube approach, the lamp **1** results in the same lumen maintenance and lamp life but higher lumens per unit volume. This leads to a fundamentally more compact fluorescent lamp. This is one of the advantages of the flat lamp approach.

If necessary, the fluorescent lamp **1** of the present invention may be formed into a package of equal size and shape to an incandescent lamp. That is, as shown in FIG. 2, a ballast **17** is disposed at the cathode plate side of the lamp **1** to obtain a unidirectional lamp **30**. The lamp **30** has a screw-type electrical power fitting **31** that matches a typical incandescent bulb receptacle (not shown). Thus, the regular incandescent lamp can be replaced with the present unidirectional lamp.

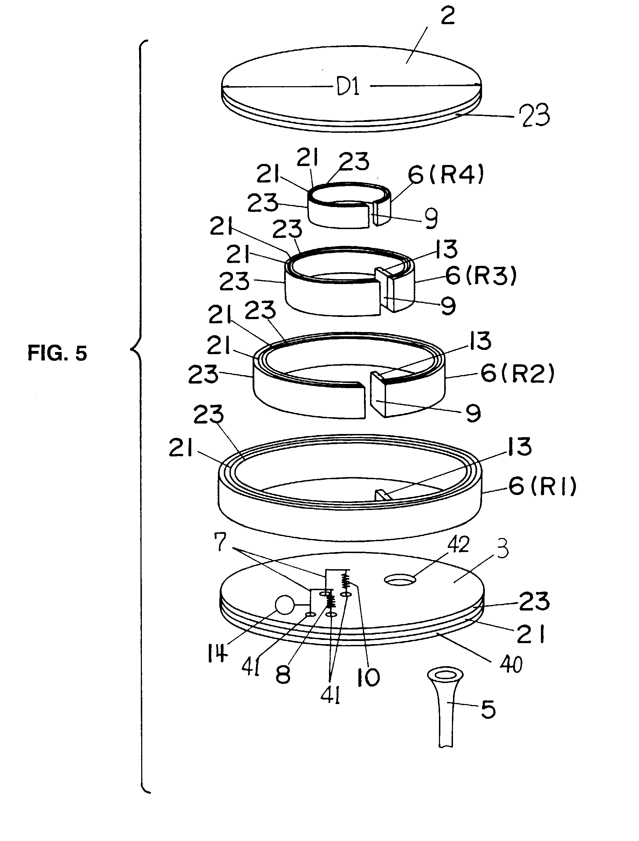

The fluorescent lamp **1** of FIG. 1 can be made in accordance with the following process of the present invention, as shown in FIG. 5. Four glass rings, **R1**, **R2**, **R3** and **R4** are cut out of soda-lime glass tubes with inner diameters of 72 mm, 49 mm, 32.5 mm and 15 mm, respectively. All of the rings has a height of 25.4 mm. Except for the ring **R1**, the rings **R2-R4** have the slotted openings **9** of widths 10 mm (**R2**), 7 mm (**R3**) and 6 mm (**R4**), respectively. After the rings are pre-cleaned, inner and outer surfaces of the rings **R2-R4** and an inner surface of the ring **R1** are coated with alumina (Al₂O₃) as the reflective coating **21**. A frit glass paste is applied to edges of the rings **R1-R4**, and then the rings are attached to a circular glass plate with a diameter **D1** of 76.2 mm as the viewing plate **2** in a concentric pattern to define an inner channel between adjacent rings. The back discharge suppresser plates **13** are sealingly attached to the viewing plate **2** and between the adjacent rings such that each of the inner channels is joined with adjacent inner channel through the slotted opening **9** to form the continuous spiral discharge path **4**, to thereby obtain an intermediate product. The intermediate product is sealed at a temperature of 450 °C. An outer channel defined between the rings **R1** and **R2** has a channel width of 10.5 mm. Two inner channels are defined between the rings **R2** and **R3**, and between the rings **R3** and **R4**, respectively. A channel width of each of the inner channels is of 7.5 mm. The internal surfaces of the intermediate product are coated with a phosphor material to form the phosphor coating **23** thereon. The phosphor coating **23** is baked for organic burn-out. Free edges of the rings **R1-R4** are cleaned free of the phosphor material. The frit glass paste is applied to the free edges of the rings and dried.

A preparation of the cathode plate **3** is completed in the following sequence :
(1) A circular plate **40** of the soda-lime glass with a diameter of 76.2 mm and thickness of 3 mm is cut.
(2) Two pairs of holes **41** of diameter 2.3 mm are drilled at predetermined locations on the circular plate **40**. A fifth hole **42** for attaching the exhaust tube **5** is drilled in the circular plate **40** so as to be arranged away from the pairs of the holes **41**.
(3) Two pairs of the electrical leads **7** of Ni-Fe-Cr alloy are heat-treated and frit sealed through the two pairs of the holes **41**.
(4) A flat surface of the circular plate **40** is coated with alumina (Al₂O₃). The alumina coating is baked for organic burn-out.
(5) The phosphor coating **23** is formed on the alumina coating and baked for burn-out.
(6) Each of triple carbonate coated filaments as the electrodes **8** and **10** is welded to the pair of the electrical leads **7**. In FIG. 5, the mercury dispensing getter **14** is attached to the electrical lead **7** of the electrode **8**.

The intermediate product and the cathode plate **3** are placed in alignment to obtain a lamp assembly. After the frit glass paste is applied to an edge of the exhaust tube **5**, the exhaust tube is laid over the fifth hole **42** of the cathode plate **3**. A sealing pressure is applied over the entire lamp assembly and frit-sealed in an oven at a temperature of 450 °C to obtain a sealed unit.

The sealed unit is exhausted through a special exhaust procedure and then filled with argon gas and mercury to obtain the fluorescent lamp **1**. The lamp is subjected to an aging procedure for stabilization.

In a process comprising a bending step of glass tubes for making fluorescent lamps, a thickness of the glass tube has to be large enough to withstand the atmospheric pressure. However, since the inner rings **R2-R4** are disposed within the lamp **1** and are not exposed to the atmospheric pressure, the inner rings with a thinner thickness can be used in the present process. This feature saves space and is less expensive. In addition, due to the thin thickness of the inner rings, visible light absorption decreases, so that a more efficient light source would be obtained.

The performance characteristics of the fluorescent lamp **1** manufactured by the above process are as follows. When the lamp is at ambient temperature of 25 °C, a typical lamp voltage is about 75V, at 200 mA for a lamp power of 13.6 W. The lamp exhibits a normal fluorescent volt-ampere characteristic.

### Second Embodiment

As shown in FIG. 6, a substantially flat, rectangular, arc discharge, fluorescent lamp **1A** of the second embodiment is explained below. A viewing glass plate transparent to fluorescent light is not shown in FIG. 6, so that a continuous, rectangular spiral discharge path **4A** is viewable. In this embodiment, the lamp **1A** comprises a wall structure **6A**. The wall structure **6A** consists of an outside wall **11A** and a plurality of inside walls **12A.** The inside walls **12A** are formed with one continuous strip that is bent into a square structure forming the spiral discharge path **4A**. The discharge path **4A** leads from one electrode **8A** to the other electrode **10A**. Except for the above features, the fluorescent lamp **1**A of the second embodiment is a substantially same as the lamp **1** of the first embodiment. Therefore, no duplicate explanation to common parts and operation is deemed necessary. Like parts are designated by like numerals with a suffixed letter of "**A**". The lamp **1A** of the second embodiment can be manufactured in accordance with the process of the first embodiment.

In these embodiments, many variations from the above particular designs and process are available to those of ordinary skill in the art. The number of the inner channels can be increased or decreased without substantially changing outer dimensions of the lamp. This would change lumen output. Similarly, the vertical height of the lamp can be altered depending on the needs. As the height is reduced, at the same current, an amount of power that can be coupled is increased to lead a higher lumen output.

## Claims

1. A substantially flat arc-discharge fluorescent lamp (1) comprising
a sealed flat chamber filled with a discharge gas, said chamber having a top wall (3) opaque to fluorescent light, a bottom wall (2) transparent to fluorescent light, and an inner wall structure sealingly interconnecting said top and bottom walls to form a continuous, substantially flat spiral discharge path (4),
a phosphor coating (23) formed on inner walls of said chamber, and
a pair of electrodes (8, 10) disposed at opposite ends of said discharge path (4) for establishing and maintaining an arc of said discharge gas,
characterised in that said inner wall structure includes a plurality of concentric rings (11, 12) of different diameters, wherein each ring (12) except the outermost (11) has a slot (9) and the annular space between each two adjacent rings is interrupted by a back discharge suppresser plate (13).

2. A substantially flat arc-discharge fluorescent lamp (1A) comprising
a sealed flat chamber filled with a discharge gas, said chamber having a top wall (3) opaque to fluorescent light, a bottom wall (2) transparent to fluorescent light, and an inner wall structure sealingly interconnecting said top and bottom walls to form a continuous, substantially flat spiral discharge path (4A),
a phosphor coating (23) formed on inner walls of said chamber, and
a pair of electrodes (8A, 10A) disposed at opposite ends of said discharge path (4A) for establishing and maintaining an arc of said discharge gas,
characterised in that said inner wall structure includes an outer wall (11A) and a plurality of inner walls (12A), the inner walls being formed of a continuous strip bent into a rectangular structure.

3. The lamp of claim 1 or 2, wherein said wall structure (12; 12A) extends perpendicularly to said top and bottom walls (3, 2).

4. The lamp of any preceding claim, wherein the thickness of said wall structure (12; 12A), the width of said discharge path (4; 4A) and the vertical height of said lamp (1; 1A) are determined to provide a light flux per chamber volume in the range of about 4 to about 17 ℓm/cm³.

5. The lamp of any preceding claim, wherein said discharge path has a rounded or rectangular cross section.

6. The lamp of any preceding claim, comprising a reflective coating (21) partially formed on one side of said phosphor coating (23) such that light striking said reflective coating is directed back towards the opposite side of said phosphor coating.

7. The lamp of any preceding claim, comprising a ballast (17) and a single base (31) adapted to be inserted in a power supply socket.

8. A process for making a substantially flat arc-discharge fluorescent lamp (1), comprising the steps of:
preparing a plurality of glass rings (R1-R4) of different diameters, top and bottom glass plates (3, 2) having the same diameter as the largest one (R1) of said rings, and a plurality of back discharge suppresser plates (13), each of said rings except the largest one having a slot (9),
coating said rings except the largest one and a flat surface of said top plate with a light reflective material to obtain a reflecting film (21) thereon,
sealingly attaching said rings in a concentric pattern to said bottom plate to define an inner channel between adjacent rings,
sealingly attaching said suppresser plates to said bottom plate between adjacent rings such that each of said inner channels is interrupted and joined with an adjacent inner channel through said slot to form a continuous, flat spiral discharge path (4) on said bottom plate,
coating a phosphor on said reflecting film and a flat surface of said bottom plate along which said discharge path extends to form a phosphor film (23) thereon,
sealingly attaching a pair of electrodes (8, 10) to said top plate at positions corresponding to opposite ends of said discharge path,
sealingly attaching said top plate to free edges of said rings on said bottom plate to form a lamp vessel, and
filling said lamp vessel with mercury and at least one rare gas to obtain said fluorescent lamp.

9. The process of claim 8, comprising the step of coating an inside surface of said largest ring (R1) with said reflective material.

10. The process of claim 8 or 9, comprising the step of providing in said top plate (3) two pairs of holes (41) for sealingly attaching said electrodes (8, 10) and an exhaust hole (42) for attaching an exhaust tube (5).

11. The process of any of claims 8 to 10, comprising the step of mounting a mercury dispensing getter (14) on one of said electrodes (8 and 10).

12. The process of any of claims 8 to 11, comprising the step of ageing said fluorescent lamp (1) to stabilise the lamp characteristics.

## Patentansprüche

1. Im wesentlichen flache Bogenentladungs-Leuchtstofflampe (1) mit
einer mit einem Entladungsgas gefüllten, abgedichteten, flachen Kammer, die eine gegenüber Fluoreszenzlicht opake obere Wand (3), eine für Fluoreszenzlicht transparente untere Wand (2) und eine die obere und die untere Wand unter Bildung eines zusammenhängenden, im wesentlichen flachen, spiralförmigen Entladungsweges (4) dicht miteinander verbindende Innenwandstruktur aufweist,
einer an den inneren Wänden der Kammer vorhandene Leuchtstoffschicht (23) und
einem Paar von an entgegengesetzten Enden des Entladungsweges (4) angeordneten Elektroden (8, 10) zum Erzeugen und Aufrechterhalten eines Entladungsgas-Lichtbogens,
dadurch **gekennzeichnet**, daß die Innenwandstruktur mehrere konzentrische Ringe (11, 12) unterschiedlichen Durchmessers umfaßt, wobei jeder Ring (12) mit Ausnahme des äußersten Ringes (11) einen Schlitz (9) aufweist und der Ringraum zwischen jeweils zwei benachbarten Ringen durch eine Rückentladungs-Unterdrückerplatte (13) unterbrochen ist.

2. Im wesentlichen flache Bogenentladungs-Leuchtstofflampe (1A) mit
einer mit einem Entladungsgas gefüllten, abgedichteten, flachen Kammer, die eine gegenüber Fluoreszenzlicht opake obere Wand (3), eine für Fluoreszenzlicht transparente untere Wand (2) und eine die obere und die untere Wand unter Bildung eines zusammenhängenden, im wesentlichen flachen, spiralförmigen Entladungsweges (4A) dicht miteinander verbindende Innenwandstruktur aufweist,
einer an den inneren Wänden der Kammer vorhandene Leuchtstoffschicht (23) und
einem Paar von an entgegengesetzten Enden des Entladungsweges (4) angeordneten Elektroden (8A, 10A) zum Erzeugen und Aufrechterhalten eines Entladungsgas-Lichtbogens,
dadurch **gekennzeichnet,** daß die Innenwandstruktur eine äußere Wand (11A) und mehrere innere Wände (12A) aufweist, wobei die inneren Wände aus einem zu einem rechteckigen Aufbau gebogenen kontinuierlichen Streifen geformt sind.

3. Lampe nach Anspruch 1 oder 2, wobei die Wandstruktur (12; 12A) senkrecht zu der oberen und der unteren Wand (3, 2) verläuft.

4. Lampe nach einem der vorhergehenden Ansprüche, wobei die Dicke der Wandstruktur (12; 12A) die Breite des Entladungsweges (4; 4A) und die senkrechte Höhe der Lampe (1; 1A) so bestimmt sind, daß ein Lichtstrom pro Kammervolumen im Bereich von etwa 4 bis etwa 17 lm/cm³ erzielt wird.

5. Lampe nach einem der vorhergehenden Ansprüche, wobei der Entladungsweg einen gerundeten oder rechteckigen Querschnitt aufweist.

6. Lampe nach einem der vorhergehenden Ansprüche mit einer reflektierenden Schicht (21), die partiell auf einer Seite der Leuchtstoffschicht (23) so ausgebildet ist, daß auf die reflektierende Schicht auftreffendes Licht auf die gegenüberliegende Seite der Leuchtstoffschicht zurückgeworfen wird.

7. Lampe nach einem der vorhergehenden Ansprüche mit einem Vorschaltgerät (17) und einem einzigen in eine Stromversorgungsfassung einsetzbaren Sockel (31).

8. Verfahren zum Herstellen einer im wesentlichen flachen Bogenentladungs-Leuchtstofflampe (1), wobei
mehrere Glasringe (R1-R4) unterschiedlichen Durchmessers, eine obere und eine untere Glasplatte (3, 2), die den gleichen Durchmesser wie der größte (R1) der Ringe aufweisen, und mehrere Rückentladungs-Unterdrückerplatten (13) vorgesehen werden, wobei jeder der Ringe mit Ausnahme des größten einen Schlitz (9) aufweist,
die Ringe mit Ausnahme des größten sowie eine ebene Oberfläche der oberen Platte mit lichtreflektierendem Material beschichtet werden, um einen reflektierenden Film (21) darauf auszubilden,
die Ringe in konzentrischem Muster an der unteren Platte dicht so angebracht werden, daß zwischen benachbarten Ringen ein innerer Kanal entsteht,
die Unterdrückerplatten an der unteren Platte zwischen benachbarten Ringen dicht so angebracht werden, daß jeder der inneren Kanäle unterbrochen und durch den Schlitz hindurch mit einem benachbarten inneren Kanal verbunden wird, so daß auf der Bodenplatte ein kontinuierlicher, flacher, spiralförmiger Entladungsweg (4) entsteht,
der reflektierende Film und eine ebene Oberfläche der unteren Platte, längs der der Entladungsweg verläuft, mit einem Leuchtstoff beschichtet wird, um eine Leuchtstoffschicht (23) darauf auszubilden,
an der oberen Platte an den entgegengesetzten Enden des Entladungsweges entsprechenden Stellen ein Paar von Elektroden (8, 10) dicht angebracht wird,
die obere Platte an den freien Kanten der auf der unteren Platte vorhandenen Ringe dicht angebracht wird, so daß ein Lampengefäß entsteht, und
das Lampengefäß mit Quecksilber und mindestens einem Edelgas gefüllt wird, so daß die Fluoreszenzlampe entsteht.

9. Verfahren nach Anspruch 8, wobei eine innere Fläche des größten Ringes (R1) mit dem reflektierenden Material beschichtet wird.

10. Verfahren nach Anspruch 8 oder 9, wobei in der oberen Platte (3) zwei Paare von Löchern (41) zum dichten Anbringen der Elektroden (8, 10) sowie ein Absaugloch (42) zum Anbringen an ein Absaugrohr (5) vorgesehen werden.

11. Verfahren nach einem der Ansprüche 8 bis 10, wobei an einer der Elektroden (8 und 10) ein Quecksilber abgebender Getter (14) montiert wird.

12. Verfahren nach einem der Ansprüche 8 bis 11, wobei die Leuchtstofflampe (1) zum Stabilisieren der Lampenkennlinien gealtert wird.

## Revendications

1. Lampe fluorescente à décharge d'arc sensiblement plate (1), comprenant
une chambre étanche plate remplie de gaz de décharge, ladite chambre ayant une paroi supérieure (3) opaque à la lumière fluorescente et une paroi inférieure (2) transparente à la lumière fluorescente, et une structure de paroi intérieure reliant l'une à l'autre de manière étanche lesdites parois supérieure et inférieure pour former un trajet de décharge continu (4), sensiblement plat, en spirale,
un revêtement (23) de matière phosphorescente formé sur des parois intérieures de ladite chambre, et
une paire d'électrodes (8, 10) disposées aux extrémités opposées dudit trajet de décharge (4) pour établir et entretenir un arc dudit gaz de décharge,
caractérisée en ce que ladite structure de paroi intérieure comporte une pluralité d'anneaux concentriques (11, 12) de différents diamètres, chaque anneau (12) à l'exception de l'anneau extérieur (11) ayant une ouverture (9) et l'espace annulaire entre chaque paire d'anneaux adjacents étant interrompu par une plaque (13) de suppression de décharges en retour.

2. Lampe fluorescente à décharge d'arc sensiblement plate (1), comprenant
une chambre étanche plate remplie de gaz de décharge, ladite chambre ayant une paroi supérieure (3) opaque à la lumière fluorescente et une paroi inférieure (2) transparente à la lumière fluorescente, et une structure de paroi intérieure reliant l'une à l'autre de manière étanche lesdites parois supérieure et inférieure pour former un trajet de décharge continu (4A), sensiblement plat, en spirale,
un revêtement (23) de matière phosphorescente formé sur des parois intérieures de ladite chambre, et
une paire d'électrodes (8A, 10A) disposées aux extrémités opposées dudit trajet de décharge (4A) pour établir et entretenir un arc dudit gaz de décharge,
caractérisée en ce que ladite structure de paroi intérieure comporte une paroi extérieure (11A) et une pluralité de parois intérieures (12A), les parois intérieures se présentant sous la forme d'une bande continue cintrée pour former une structure rectangulaire.

3. Lampe selon la revendication 1 ou 2, dans laquelle ladite structure de paroi (12; 12A) s'étend perpendiculairement auxdites parois supérieure et inférieure (3, 2).

4. Lampe selon l'une quelconque des revendications précédentes, dans laquelle l'épaisseur de ladite structure de paroi (12; 12A), la largeur dudit trajet de décharge (4; 4A) et la hauteur verticale de ladite lampe (1; 1A) sont déterminées pour réaliser un flux de lumière par volume de chambre compris entre environ 4 et environ 17 lm/cm³.

5. Lampe selon l'une quelconque des revendications précédentes, dans laquelle ledit trajet de décharge a une section transversale ronde ou rectangulaire.

6. Lampe selon l'une quelconque des revendications précédentes, comprenant un revêtement réfléchissant (21) partiellement formé sur une face dudit revêtement (23) de matière phosphorescente de façon que la lumière frappant ledit revêtement réfléchissant soit renvoyée vers la face opposée dudit revêtement de matière phosphorescente.

7. Lampe selon l'une quelconque des revendications précédentes, comprenant un ballast (17) et un culot simple (31) conçu pour être introduit dans une prise d'alimentation électrique.

8. Procédé pour fabriquer une lampe fluorescente à décharge d'arc sensiblement plate (1), comprenant les étapes consistant à:
réaliser une pluralité d'anneaux (R1-R4) en verre de différents diamètres, des plaques supérieure et inférieure (3, 2) en verre ayant le même diamètre que le plus grand (R1) desdits anneaux, et une pluralité de plaques (13) de suppression de décharge en retour, chacun desdits anneaux à l'exception du plus grand ayant une ouverture (9),
revêtir les anneaux, à l'exception du plus grand, et une surface plane de ladite plaque supérieure avec une matière réfléchissant la lumière pour obtenir sur ceux-ci une pellicule réfléchissante (21),
fixer de manière étanche les anneaux suivant une configuration concentrique sur ladite plaque inférieure pour définir un canal intérieur entre les anneaux adjacents,
fixer de manière étanche lesdites plaques de suppression à ladite plaque inférieure entre les anneaux adjacents de façon que chacun desdits canaux intérieurs soit interrompu et réuni à un canal intérieur adjacent par ladite ouverture pour former sur ladite plaque inférieure un trajet de décharge (4) continu, plat, en spirale,
appliquer un revêtement de matière phosphorescente sur ladite pellicule réfléchissante et une surface plane de ladite plaque inférieure sur lesquelles ledit trajet de décharge s'étend pour former sur celles-ci une pellicule (23) de matière phosphorescente,
fixer de manière étanche une paire d'électrodes (8, 10) à ladite plaque supérieure, à des emplacements correspondant aux extrémités opposées dudit trajet de décharge,
fixer de manière étanche ladite plaque supérieure à des bords libres desdits anneaux sur ladite plaque inférieure pour former une cuve de lampe, et
remplir ladite cuve de lampe avec du mercure et au moins un gaz rare pour obtenir ladite lampe fluorescente.

9. Procédé selon la revendication 8, comprenant l'étape consistant à revêtir avec ladite matière réfléchissante une surface intérieure dudit anneau (R1) le plus grand.

10. Procédé selon la revendication 8 ou 9, comprenant l'étape consistant à réaliser dans ladite plaque supérieure (3) trois paires de trous (41) servant à fixer de manière étanche lesdites électrodes (8, 10) et un trou d'échappement (42) pour fixer un tube d'échappement (5).

11. Procédé selon l'une quelconque des revendications 8 à 10, comprenant l'étape consistant à monter sur une desdites électrodes (8 et 10) un getter (14) délivrant du mercure.

12. Procédé selon l'une quelconque des revendications 8 à 11, comprenant l'étape consistant à laisser vieillir ladite lampe fluorescente (1) pour stabiliser les caractéristiques de la lampe.
